# EUROPÄISCHE PATENTSCHRIFT

(11) **EP 0 338 448 B1**
(45) Veröffentlichungstag und Bekanntmachung des Hinweises auf die Patenterteilung: **02.02.1994**
(21) Anmeldenummer: 89106719.1
(22) Anmeldetag: 14.04.1989
(51) Int. Cl.: F16J 9/00, F16J 9/26

(54) **Gleitender Reibung ausgesetztes Maschinenteil**
Engine part exposed to sliding friction
Pièce de machine exposée à la friction de glissement

(30) Priorität: 22.04.1988 DE 3813617
(43) Veröffentlichungstag der Anmeldung: 25.10.1989
(73) Patentinhaber: GOETZE AG, D-51399 Burscheid (DE)
(72) Erfinder: Michel, Hans-Albert, Dipl.-Ing., D-5090 Leverkusen 3 (DE)

(56) Entgegenhaltungen:
- FR-A- 1 143 984
- US-A- 4 636 285

## Beschreibung

Die Erfindung betrifft ein der gleitenden Reibung ausgesetztes Maschinenteil, wie insbesondere einen Kolbenring für Verbrennungskraftmaschinen mit einer galvanisch abgeschiedenen Chromschicht auf der Lauffläche, die zur Verbesserung ihrer Ölbenetzbarkeit und ihres Ölrückhaltevermögens aufgerauht ist.

Es ist bekannt, die Laufflächen von der gleitenden Reibung ausgesetzten Maschinenteilen, wie insbesondere von Kolbenringen für Verbrennungskraf tmaschinen, mit galvanischen Chromschichten zu versehen. Chromschichten sind besonders verschleißfest so daß Kolbenringe mit chrombeschichteten Laufflächen eine wesentlich verbesserte Lebensdauer besitzen. Galvanisch abgeschiedene und nicht weiter behandelte Chromschichten sind allerdings nur schwer ölbenetzbar, so daß sich der im Betrieb in einer Verbrennungskraftmaschine zur Schmierung erforderliche Ölfilm zwischen Kolbenringlauffläche und der Zylinderwandung als Gegenlauffläche nur schwer ausbilden kann. Als Folge davon ist beispielsweise auch die Brandspursicherheit derartiger Schichten nicht immer befriedigend.

Zur Abhilfe ist es bekannt, die Chromschicht der Lauffläche durch elektrochemische Verfahren oder durch mechanische Verfahren aufzurauhen. Beim elektrochemischen Aufrauhen wird dabei das natürliche Chromschichtrißnetzwerk durch Ätzen, durch thermische Behandlungen und/oder durch periodische Stromumkehr während der Chromabscheidung aufgeweitet, während in mechanischen Verfahren in der Chromschicht durch beispielsweise Schleifen, Honen, Läppen oder Sandstrahlen Riefen und Eindrückspuren erzeugt werden. Das so erzeugte Rauhprofil besitzt Rauhtiefen von über 0,004 mm bei Breiten der Vertiefungen von 0,1 mm oder mehr. Diese Vertiefungen wirken als Ölnuten oder Ölnäpfchen, die die Olbenetzbarkeit und das Ölrückhaltevermögen erhöhen, so daß sich im motorischen Betrieb der erforderliche Ölfilm mit Ölreservoiren für die Mangelschmierung im Notfall ausbilden kann. Durch die Aufrauhung erhält die Chromschicht auch eine verbesserte Brandspurfestigkeit.

Nachteilig bei vor allem mechanisch aufgerauhten Chromschichten sind ein gegebenenfalls entstandenes scharfkantiges Rauhigkeitsbild mit gegebenenfalls teilweiser Schichtlockerung mit nur noch geringer Haftung. Insbesondere bei extremer Beanspruchung in hoch belasteten Verbrennungskraftmaschinen können vorher gelockerte Schichtbereiche ausbrechen und sowohl die ausgebrochenen und zwischen die Laufflächen geratenen Chromteilchen als auch die scharfkantigen Rauhigkeitsspitzen können an der Gegenlauffläche unerwünschte Schleifspuren und Riefen mit gegebenenfalls davon ausgehenden stärkeren Zerstörungen erzeugen. Analog kann das elektrochemische Aufweiten des natürlichen Chromrißnetzwerkes zu Schichtlockerungen mit nachfolgenden Ausbrüchen und Zerstörungen führen.

Der vorliegenden Erfindung liegt daher die Aufgabe zugrunde, ein gleitender Reibung ausgesetztes Maschinenteil gemäß Oberbegriff des Hauptpatentanspruchs ohne die beschriebenen Nachteile zu schaffen. Die Maschinenteile sollen dabei wirtschaftlich herstellbar sein.

Erfindungsgemäß wird diese Aufgabe durch eine auf die elektrochemisch und/oder mechanisch aufgerauhte Laufflächenchromschicht galvanisch mit einer Schichtdicke zwischen 0,001 und 0,004 mm abgeschiedenen metallischen Zusatzschicht gelöst, welche aus einem weicheren Metall als Chrom besteht.

Bei Untersuchungen der Querschliffbilder wurde festgestellt, daß sich die Zusatzschicht auf der aufgerauhten Chromschicht dem Verlauf des Rauhprofils folgend an der Oberfläche in gleichmäßiger Schichtdicke abgeschieden hatte. Das Rauhigkeitsprofil ist praktisch völlig erhalten, so daß die Laufflächenbeschichtung weiterhin gut ölbenetzbar ist und ein gutes Ölhaltevermögen durch Ölnuten und Ölnäpfchen besitzt. Der im motorischen Betrieb erforderliche Ölfilm mit Ölreservoiren für Fälle der Mangelschmierung kann sich weiterhin optimal ausbilden. Durch die erfindungsgemäß aufgetragene Zusatzbeschichtung werden aber die scharfkantigen Rauhigkeitsspitzen mit der weichen Schicht abgedeckt und die losen beziehungsweise gelockerten Chromschichtteile werden durch die überdeckende Zusatzschicht gebunden. Die überdeckten scharfkantigen Rauhigkeitsspitzen können jetzt keine Schleifspuren oder Riefen auf den Gegenlaufflächen erzeugen und die Zusatzschicht wirkt als Einbettung, die während des motorischen Betriebs gleichmäßig mit den Chromspitzen abgerieben werden. Die Zusatzschicht in den Nuten und Näpfchen der Chromschicht, die mit der Gegenfläche nicht in gleitendem Kontakt steht, bleibt während der gesamten Lebensdauer der Maschinenteile erhalten. Sie wirkt dort als Bindeschicht und verhindert den Ausbruch loser und gelockerter Chromschichtbereiche mit seinen nachteiligen Folgen.

In bevorzugten Anwendungsfällen besteht die galvanisch abgeschiedene Zusatzschicht aus den weicheren Metallen Kupfer, Zinn, Zink und deren Legierungen, im Prinzip können aber auch Cadmium, Nickel, Cobalt oder auch Edelmetalle eingesetzt werden. Die Abscheidung dieser Metalle kann dabei sowohl galvanisch durch Elektrolyse als auch stromlos nach einem der bekannten Verfahren erfolgen. Bei elektrochemisch durch Aufweitung des natürlichen Chromrißnetzwerkes erzeugten Aufrauhungen dient die aufgetragene Zusatzschicht im wesentlichen zur Sicherung und Bindung von gelockerten Schichtbereichen.

Die erfindungsgemäß ausgerüsteten Maschinenteile sind vor allem Kolbenringe, die in Verbrennungskraftmaschinen unter extremen Belastungen eingesetzt werden, und bei denen es auf die Ausbildung eines optimalen Ölfilms mit Ölreservoiren für die Mangelschmierung ankommt. Im Prinzip können derartige Kolbenringe in Pumpen oder zur Wellenabdichtung eingesetzt werden, oder die Maschinenteile können in anderen Maschinen, beispielsweise als Gleitringe oder Laufringe, verwendet werden.

Durch die Erfindung können somit gleitender Reibung ausgesetzte Maschinenteile mit aufgerauhten Laufflächenchromüberzügen betriebssicherer vor allem in Verbrennungskraftmaschinen eingesetzt werden. Das Aufbringen der erfindungsgemäß aufgetragenen Zusatzschicht ist vergleichsweise einfach und dadurch wirtschaftlich. Gegebenenfalls ist es möglich, die erfindungsgemäß eingesetzte Zusatzschicht auf andere aufgerauhte verschleißfeste Laufflächenbeschichtungen, wie zum Beispiel Plasmaschweißschichten, aufzutragen.

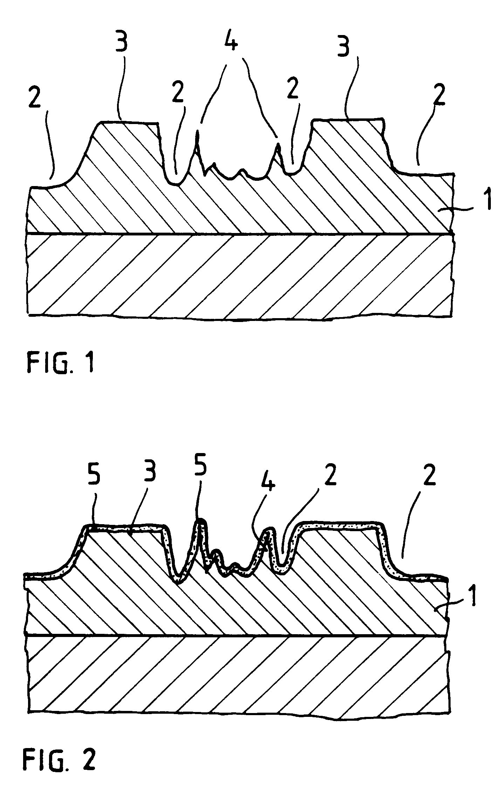

Die Erfindung wird durch die beiden Abbildungen näher erläutert, die im Bild 1 eine aufgerauhte Chromschicht als Laufflächenbeschichtung eines Kolbenringes im Querschnitt zeigt, die im Bild 2 mit der erfindungsgemäßen Zusatzbeschichtung versehen ist.

In den Bildern ist 1 die Chromschicht, die mechanisch unter Bildung von Eindrückspuren beziehungsweise Nuten 2 aufgerauht ist. Dabei haben sich kraterförmige Vertiefungen 2 unterschiedlicher Tiefe, plattenförmige Erhebungen 3 und Rauhigkeitsspitzen 4 mit scharfen Kanten in der Chromschicht 1 ausgebildet.

Im Bild 2 ist eine galvanische Kupferschicht 5 als Zusatzschicht auf der aufgerauhten Chromschicht abgeschieden. Die Schicht besitzt eine Dicke von etwa 0,002 mm und bedeckt die Chromschicht 1 in gleichmäßiger Schichtdicke. Dadurch ist das Rauhprofil 2, 3, 4 praktisch unverändert, so daß die Chromschicht 1 weiterhin eine gute Ölbenetzbarkeit mit Öltaschen beziehungsweise Ölnuten 2 als Ölreservoir für die Mangelschmierung besitzt. Gleichzeitig sind die scharfkantigen Rauhigkeitsspitzen 4 vom weicheren Kupfer 5 umhüllt und können keine Schleifspuren und Riefen im Betrieb in die Gegenlauffläche einschneiden. Durch die Kupferschicht 5 sind zugleich eventuell aufgelockerte Chromschichtbereiche 1 vor dem Ausbrechen gesichert und geschützt.

## Patentansprüche

1. Gleitender Reibung ausgesetztes Maschinenteil, insbesondere Kolbenringe für Verbrennungskraftmaschinen mit einer galvanisch abgeschiedenen Chromschicht auf der Lauffläche, die zur Verbesserung ihrer Ölbenetzbarkeit und ihres Ölrückhaltevermögens elektrochemisch und/oder mechanisch aufgerauht ist, dadurch gekennzeichnet, daß auf die aufgerauhte Laufflächenchromschicht (1) galvanisch mit einer Schichtdicke zwischen 0,001 und 0,004 mm eine metallische Zusatzschicht (5) abgeschieden ist, welche aus einem weicheren Metall als Chrom besteht.

2. Maschinenteil nach Anspruch 1, dadurch gekennzeichnet, daß die Zusatzschicht (5) aus Kupfer, Zinn, Zink oder deren Legierungen besteht.

3. Maschinenteil nach mindestens einem der Ansprüche 1 bis 3, dadurch gekennzeichnet, daß die Öltaschen beziehungsweise Ölnuten (2) eine Tiefe von mindestens 0,004 mm besitzen.

## Claims

1. Engine part exposed to sliding friction, in particular piston rings for combustion engines, with an electrodeposited chromium coating on the contact surface, which is roughened electrochemically and/or mechanically to improve its oil moistening and oil retention capacity, characterized in that an additional metal coating (5) between 0,001 and 0,004 mm thick composed of a softer metal than chromium is electro-deposited onto the chromium coating (1) on the contact surfaces, which has been roughened by electrochemical and/or mechanical means.

2. Engine part according to claim 1, characterised in that the additional coating (5) is composed of copper tin, zinc or alloys thereof.

3. Engine part according to at least one of Claims 1 to 3, characterized in that the oil cavities or oil grooves (2) have a depth of at least 0,004 mm.

## Revendications

1. Pièce de machine exposée à la friction de glissement, en particulier des segments de piston pour machines à combustion interne avec une couche de chrome déposée par galvanisation sur la surface de glissement qui est rendue rugueuse électrochimiquement et/ou mécaniquement pour améliorer sa mouillabilité à l'huile et son pouvoir de rétention d'huile, charactérisée en ce qu'une couche métallique additionnelle (5) est déposée par galvanisation avec une épaisseur de couche comprise entre 0,001 et 0,004 mm sur la couche de chrome (1) de surface de glissement rendue rugueuse, ladite couche additionelle étant constituée d'un métal moins dur que le chrome.

2. Pièce de machine selon la revendication 1, caractérisée en ce que la couche additionnelle (5) et constituée de cuivre, d'étain, de zinc ou de leurs alliages.

3. Pièce de machine selon la revendication 1 ou 2, caractérisée en ce que les poches d'huile ou rainures d'huile (2) présentent une profondeur d'lau moins 0,004 mm.
